# EUROPEAN PATENT APPLICATION

(11) **EP 2 768 201 A1**
(43) Date of publication of application: **20.08.2014**
(21) Application number: 13195186.5
(22) Date of filing: 29.11.2013
(51) Int. Cl.: H04L 29/06, H04W 12/04, H04N 21/6377, H04H 60/23, H04N 7/173

(54) **Content receiving device and method for receiving encoded content, content supplying device and method for supplying encoded content**

(30) Priority: 15.02.2013 KR 20130016249
(71) Applicant: Samsung Electronics Co., Ltd, Gyeonggi-do 443-742 (KR)
(72) Inventor: Han, Seo-won, Gyeonggi-do (KR)
(74) Representative: Walaski, Jan Filip

(57) **Abstract**

An encoded contents receiving method of a contents receiving device is disclosed. The method includes pairing with a mobile device through wired or wireless communication, receiving a private key which is generated by the paired mobile device, receiving an encoded control word (CW) from a contents supplying device, and decoding the encoded CW based on the received private key to descramble an encoded contents supplied by the contents supplying device.

## Description

The present invention relates to a content receiving device and a method for receiving encoded content, and a content supplying device and a method for receiving encoded content, and more particularly, to a contents receiving device and a method for receiving encoded content, and a content supplying device and a method for supplying encoded content which allows only an authorized user to receive purchased and encoded content through a mobile device.

A broadcasting system for paid digital broadcasting service employs a conditional access system (CAS) to allow only those who pay a service fee to view programs.

To perform a conditional access function, i.e., to protect the system from unauthorized receptions, the CAS uses a scrambling technology for scrambling audio and video data; encryption technology for transmitting programs with a control word key so that the programs can be viewed by particular receivers only; and user service support function for providing a user with various services based on the aforementioned technologies.

The CAS conventionally used a fixed-type descrambler storing a decoding algorithm and secret key therein. Recently, however, it has become general to provide a user with a smart card including his/her own personal information, taking into account a billing method, convenience, security, etc.

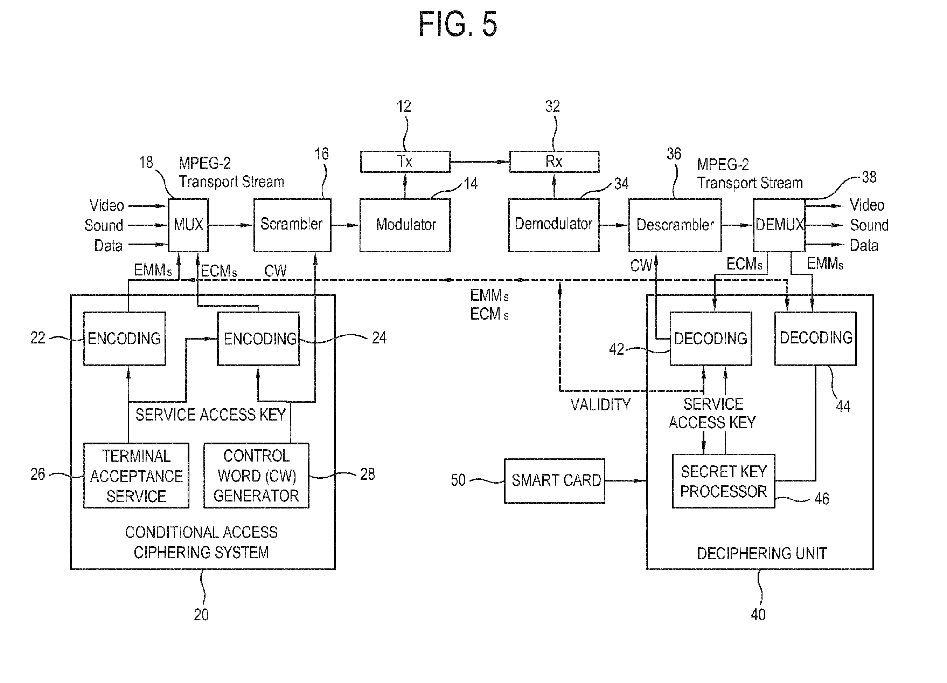

FIG. 5 illustrates a typical broadcasting transmitting and receiving system for a paid digital broadcasting service. The broadcasting transmitter generates a control word (CW) key through a conditional access ciphering system 20, and scrambles a broadcasting signal by using the CW. According to specifications of digital video broadcasting (DVB), the CW is a key of 3 Data Encryption Standard (DES) algorithm. To enable the broadcasting receiver to generate a CW, the broadcasting transmitter generates an entitlement control message (ECM) and transmits the ECM to the broadcasting receiver through a channel, and further generates an entitlement management message (EMM) controlling qualification of user service, and transmits the EMM to the broadcasting receiver.

Taking into account the user information stored in the smart card 50, and the EMM and ECM, a user generates the CW through a conditional access deciphering system 40, and descrambles the broadcasting signal.

The broadcasting system for paid digital broadcasting service has standards set for only the EMM, ECM, CW, the scrambler 16 and the descrambler 36.

The conditional access ciphering system 20 and the conditional access deciphering system 40 of the broadcasting transmitting and receiving system are set up by security software algorithm providers to protect contents.

Among the conventional paid contents transmitting and receiving systems, there are no standard conditional access ciphering system 20 or conditional access deciphering system 40, and instead there are various software algorithms.

Once being set up, the conventional paid contents transmission and reception system may not change the conditional access ciphering system 20 and the conditional access deciphering system 40. To change the conditional access ciphering system 20 and the conditional access deciphering system 40, a user should change the entire system including the receiver and transmitter, incurring a lot of costs.

Also, the conventional paid contents transmitting and receiving system is exposed to great risk of hacking, is associated with an extremely large billing system for paid contents, and if a user or service is changed, the smart card should be replaced.

Further, a single broadcasting receiving device cannot receive various types of digital broadcasting and can receive only one type of digital broadcasting.

Accordingly, one or more exemplary embodiments provide a contents transmitting and receiving device and a method for transmitting and receiving encoded contents which protects paid content from hacking.

Another exemplary embodiment is to provide a contents transmitting and receiving device and a method for transmitting and receiving encoded contents which allows using a uniform smart card and conditional access algorithm.

Still another exemplary embodiment is to provide contents transmitting and receiving device and a method for transmitting and receiving encoded contents which does not require a provider to manage a special billing system for its service.

Still another exemplary embodiment is to provide a contents transmitting and receiving device and a method for transmitting and receiving an encoded contents which makes a billing system simple by allowing a user to pay fees for all contents viewed by the user through a single mobile device.

Still another exemplary embodiment is to provide a contents transmitting and receiving device and a method for transmitting and receiving encoded contents which allows a user to use a broadcasting service through a portable mobile device without limitation of location and time.

The foregoing and/or other aspects may be achieved by providing an encoded contents receiving method of a contents receiving device, the method comprising pairing with a mobile device through one from among a wired communication and a wireless communication, receiving a private key which is generated by the paired mobile device, receiving an encoded control word (CW) from a contents supplying device, and decoding the encoded CW based on the received private key to descramble an encoded contents supplied by the contents supplying device.

In the encoded contents receiving method, the CW may be encoded by the contents supplying device based on a public key which is generated by the mobile device together with the private key.

In the encoded contents receiving method, the private key and public key may be generated by combining at least two from among a contents purchase certificate, a pairing certificate and information of the mobile device.

In the encoded contents receiving method, the pairing step may comprise receiving a request for pairing from the mobile device, transmitting an acceptance number to the mobile device, receiving a first acceptance certificate and a first message private key of the mobile device, and transmitting a second acceptance certificate and a second message private key of the contents receiving device to the mobile device.

In the encoded contents receiving method, the pairing step further may comprise storing the first acceptance certificate and the first message private key of the mobile device.

In the encoded contents receiving method, the pairing step further may comprise determining whether a number of registered mobile devices at the time when the pairing request has been received exceeds a predetermined number.

In the encoded contents receiving method, the determining step may comprise transmitting a pairing unavailable notification to the mobile device if it is determined that the number of the registered mobile devices exceeds the predetermined number.

In the encoded contents receiving method, the contents purchase certificate may be provided by the contents supplying device in response to a request for contents from the mobile device.

In the encoded contents receiving method, the contents supplying device may charge a contents fee to a billing system of the mobile device according to the request for the contents from the mobile device.

In the encoded contents receiving method, the encoded CW may be received via the mobile device.

The foregoing and/or other aspects may be achieved by providing a contents receiving device which receives an encoded contents, the device comprising a receiver which is configured to receive an encoded contents from a contents supplying device, a communicator which is configured to communicate with a mobile device, a controller which is configured to control the communicator to pair with the mobile device, to receive a private key from the paired mobile device, and to receive an encoded control word (CW) from the contents supplying device through the mobile device, and a decipherer which is configured to decode the encoded CW based on the received private key to descramble the encoded contents supplied by the contents supplying device.

In the contents receiving device, the CW may be encoded by the contents supplying device based on a public key which is generated by the mobile device together with the private key.

In the contents receiving device, the private key and the public key may be generated by combining at least two from among a contents purchase certificate, a pairing certificate and information of the mobile device.

In the contents receiving device, the pairing with the mobile device may include receiving a request for pairing from the mobile device, transmitting an acceptance number to the mobile device, receiving a first acceptance certificate and a first message private key of the mobile device, and transmitting the first acceptance certificate and the first message private key of the contents receiving device to the mobile device.

The contents receiving device further may comprise a storage part which is configured to store therein the received first acceptance certificate and the first message private key of the mobile device.

In the contents receiving device, the controller may determine whether a number of registered mobile devices at a time when the pairing request has been received exceeds a predetermined number.

In the contents receiving device, the controller may transmit a pairing unavailable notification to the mobile device if it is determined that the number of the registered mobile devices exceeds the predetermined number.

In the contents receiving device, the contents purchase certificate may be provided by a contents supplying device in response to the request for the contents from the mobile device.

In the contents receiving device, the contents supplying device may charge a contents fee to a billing system of the mobile device according to the request for the contents from the mobile device.

In the contents receiving device, the communicator may receive the encoded CW via the mobile device.

The foregoing and/or other aspects may be achieved by providing a decoded key generating method for an encoded contents, the method comprising pairing, by a mobile device, with a contents receiving device through communication, purchasing contents from a contents supplying device and receiving a contents purchase certificate, generating a public key and a private key based on the contents purchase certificate, transmitting the private key to the paired contents receiving device, transmitting the public key to the contents supplying device and receiving from the contents supplying device an encoded control word (CW) generated by the contents supplying device on the basis of the public key and transmitting the encoded CW to the contents receiving device.

In the decoded key generating method, the private key and the public key may be generated by combining at least two from among a contents purchase certificate, a pairing certificate and information of the mobile device.

In the decoded key generating method, the pairing step may include requesting the contents receiving device to pair with the mobile device, receiving a pairing acceptance number from the contents receiving device, accepting the pairing based on the pairing acceptance number and transmitting a first acceptance certificate and a first message private key and receiving a second acceptance certificate and a second message private key of the contents receiving device.

In the decoded key generating method, the pairing step further may include storing the second acceptance certificate and the second message private key of the contents receiving device.

In the decoded key generating method, the contents purchase certificate may be provided by a contents supplying device in response to the request for the contents.

In the decoded key generating method, the contents supplying device may charge a contents fee to a billing system of the mobile device according to the request for the contents.

The foregoing and/or other aspects may be achieved by providing a mobile device comprising a key generator which is configured to generate a public key and a private key, a communicator which is configured to communicate with a contents receiving device and a contents supplying device in one from among a wired manner and a wireless manner and a controller which is configured to control the communicator to pair with the contents receiving device, to transmit a private key to the paired contents receiving device, to transmit the public key to the contents supplying device and to receive from the contents supplying device an encoded control word (CW) which is generated on the basis of the public key, and to transmit the encoded CW to the contents receiving device.

In mobile device, the private key and public key may be generated by combining at least two from among a contents purchase certificate, a pairing certificate and information of the mobile device.

In mobile device, the pairing may include requesting the contents receiving device to pair with the mobile device, receiving a pairing acceptance number from the contents receiving device, accepting the pairing on the basis of the pairing acceptance number and transmitting a first acceptance certificate and a first message private key to the contents receiving device and receiving a second acceptance certificate and a second message private key of the contents receiving device.

The mobile device may further comprise a storage part which stores therein the received second acceptance certificate and the second message private key of the contents receiving device.

In mobile device, the contents purchase certificate may be provided by the contents supplying device in response to the request for the contents.

In mobile device, the contents supplying device may charge a contents fee to a billing system of the mobile device according to the request for the contents from the mobile device.

The foregoing and/or other aspects may be achieved by providing a encoded contents supplying method, the method comprising receiving, at a contents supplying device, a request for contents from a mobile device, transmitting a contents purchase certificate to the mobile device in response to the request for the contents, receiving from the mobile device a public key which is generated on the basis of the contents purchase certificate, generating an encoded control word (CW) based on the public key, transmitting the generated encoded CW to the mobile device and transmitting to a contents receiving device an encoded contents that is receivable by using the CW.

In an encoded contents supplying method, the mobile device may generate a private key together with the public key.

In encoded contents supplying method, the public key and the private key generated by the mobile device may be generated by combining at least two from among a contents purchase certificate, a pairing certificate and information of the mobile device.

In an encoded contents supplying method, the encoded CW may be decodable by using the private key.

The foregoing and/or other aspects may be achieved by providing an encoded contents supplying device, the device comprising a communicator which is configured to communicate with a mobile device, a controller which is configured to control the communicator to transmit a contents purchase certificate to the mobile device in response to a request for a contents from the mobile device and to receive from the mobile device a public key that is generated on the basis of the contents purchase certificate, a cipherer which is configured to generate an encoded control word (CW) by using the public key to transmit the encoded CW to the mobile device and a transmitter which is configured to transmit to a contents receiving device an encoded contents that is receivable by using the CW.

In an encoded contents supplying device, the mobile device may generate a private key together with the public key.

In an encoded contents supplying device, the public key and the private key generated by the mobile device may be generated by combining at least two from among a contents purchase certificate, a pairing certificate and information of the mobile device.

In an encoded contents supplying device, the encoded CW may be decodable by using the private key.
The foregoing and/or other aspects may be achieved by providing an encoded contents transmitting and receiving method, the method comprising pairing a contents receiving device and a mobile device, generating a private key and a public key by the paired mobile device, transmitting the private key by the mobile device to the contents receiving device and transmitting the public key by the mobile device to a contents supplying device, generating an encoded control word (CW) by the contents supplying device on the basis of the public key and transmitting the encoded CW to the mobile device, transmitting the encoded CW by the mobile device to the contents receiving device and decoding the encoded CW on the basis of the received private key to descramble contents by the contents receiving device.

The encoded contents transmitting and receiving method may further include requesting for contents from a contents supplying device by the mobile device, and transmitting a contents purchase certificate to the mobile device by the contents supplying device in response to the request for the contents.

In the encoded contents transmitting and receiving method, the public key and the private key may be generated by combining at least two from among a contents purchase certificate, a pairing certificate and information of the mobile device.

In the encoded contents transmitting and receiving method, the pairing step may comprise requesting the contents receiving device to pair with the mobile device, transmitting an acceptance number by the contents receiving device to the mobile device, accepting the pairing by the mobile device and transmitting a first acceptance certificate and a first message private key to the contents receiving device and accepting the pairing by the contents receiving device and transmitting a second acceptance certificate and a second message private key to the mobile device.

In the encoded contents transmitting and receiving method, the pairing step may further include storing the acceptance certificates and the message private keys received by the mobile device and the contents receiving device.

In the encoded contents transmitting and receiving method, the contents supplying device may charge a contents fee to a billing system of the mobile device according to the request for the contents from the mobile device.
The foregoing and/or other aspects may be achieved by providing an encoded contents transmitting and receiving system, the system including an encoded contents supplying device which supplies an encoded contents, an encoded contents receiving device which receives the encoded contents from the encoded contents supplying device and a mobile device which is connected between the encoded contents supplying device and the encoded contents receiving device for communication and generates a decoding key to decode an encoded contents.

In an encoded contents transmitting and receiving system, the encoded contents supplying device may include an encoded contents supplying device as disclosed above.

In an encoded contents transmitting and receiving system, the encoded contents receiving device may include an encoded contents receiving device as disclosed above.

In an encoded contents transmitting and receiving system, the mobile device may include a mobile device as disclosed above.

The foregoing and/or other aspects may be achieved by providing a pairing method between a contents receiving device and a mobile device for receiving an encoded contents, the method including requesting the contents receiving device to pair with a mobile device, transmitting an acceptance number by the contents receiving device to the mobile device, accepting the pairing by the mobile device and transmitting a first acceptance certificate and a first message private key to the contents receiving device and accepting the pairing by the contents receiving device and transmitting a second acceptance certificate and a second message private key to the mobile device.

The pairing method may further include storing the acceptance certificates and the message private keys received by the mobile device and the contents receiving device.

The pairing method may further comprise: determining whether a number of the registered, paired mobile devices at the time when the contents receiving device requests for pairing exceeds a predetermined number.

In the pairing method, the determining step may comprise transmitting a pairing unavailable notification to the mobile device if the contents receiving device determines that the number of the registered mobile devices exceeds the predetermined number.

The above and/or other aspects will become apparent and more readily appreciated from the following description of the exemplary embodiments, taken in conjunction with the accompanying drawings, in which:
FIG. 1 illustrates an encoded contents transmitting and receiving system according to an exemplary embodiment;
FIG. 2 is a block diagram of the encoded contents transmitting and receiving system according to the exemplary embodiment;
FIG. 3 is a flowchart showing encoded contents transmitting and receiving method according to the exemplary embodiment;
FIG. 4 is a flowchart showing a pairing process between a contents receiving device and a mobile device; and
FIG. 5 illustrates a conventional broadcasting system for paid digital broadcasting service.

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

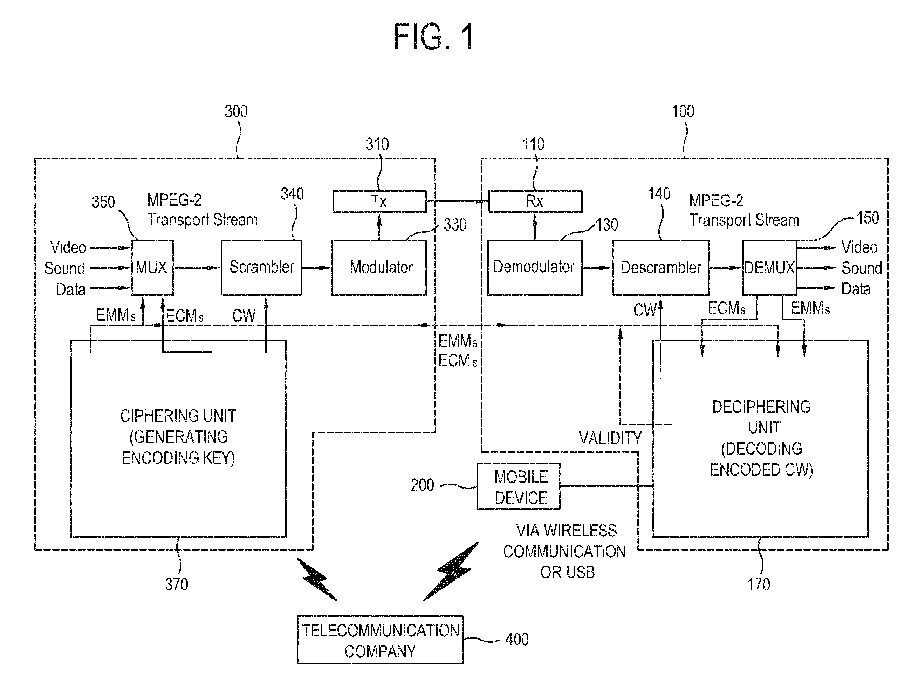

FIG. 1 illustrates a broadcasting conditional access service system as an example of a paid contents transmitting and receiving system according to an exemplary embodiment. The present exemplary embodiment may include, but is not limited to, a broadcasting conditional access service system for broadcasting contents as in FIG. 1, and may apply to other conditional access systems for various types of digital contents.

As shown in FIG. 1, the broadcasting conditional access service system according to the exemplary embodiment may include a broadcasting contents receiving device 100 which receives an encoded broadcasting contents, a broadcasting contents supplying device 300 which transmits the encoded broadcasting contents, and a mobile device 200 which is connected between the broadcasting contents receiving device 100 and the broadcasting contents supplying device 300 for communication and generates a decoding key to decode the encoded broadcasting contents.

The broadcasting contents supplying device 300 may include a multiplexer 350 which multiplexes a broadcasting contents including video, sound and data to generate a MPEG-2 transport stream (TS); a scrambler 340 which scrambles the MPEG-2 TS by using a control word (CW) key; a modulator 330 which modulates the scrambled broadcasting contents into a signal of a particular channel frequency and outputs the modulated signal; a transmitter 310 which transmits the modulated broadcasting contents signal to a plurality of broadcasting contents receiving devices; and a ciphering unit 370 which generates a CW to allow a conditional access to a broadcasting contents.

The broadcasting contents supplying device 300 may be used by a primary contents producer such as a broadcasting station or a cable TV service provider, or a secondary contents distributor which distributes produced contents.

The broadcasting contents supplying device 300 may transmit a broadcasting contents through each broadcasting channel, or may transmit a particular broadcasting contents in response to a request for the particular broadcasting contents from the broadcasting contents receiving device 100.

The ciphering unit 370 of the broadcasting contents supplying device 300 is a kind of a conditional access processor and may generate a CW through a public key transmitted by the mobile device 200 (to be described later) so that only an authorized receiver may receive the contents. The scrambler 340 may scramble the broadcasting contents by using the CW generated by the ciphering unit 370.

The broadcasting contents receiving device 100 may include a set-top box, or a digital TV including a set-top box. Of course, the broadcasting contents receiving device 100 may include a server, a computer, etc. which may receive an encoded contents, in addition to the set-top box or TV.

The broadcasting contents receiving device 100 may include a receiver 110 which receives the encoded broadcasting contents signal from the broadcasting contents supplying device 300; a demodulator 130 which demodulates the received encoded broadcasting contents signal; a descrambler 140 which descrambles the demodulated broadcasting contents by using the decoded CW; a demultiplexer 150 which demultiplexes the descrambled broadcasting contents of the MPEG-2 TS into video, sound and data; and a deciphering unit 170 (decipherer) which decodes the encoded CW transmitted through the mobile device 200.

The broadcasting contents receiving device 100 may pair with the mobile device 200 and register the paired mobile device 200 in advance, and transmit a pairing certificate to the mobile device 200.

The mobile device 200 may perform wired/wireless communication between the broadcasting contents supplying device 300 and the broadcasting contents receiving device 100 through a telecommunication company 400.

The mobile device 200 may be connected to the broadcasting contents supplying device 300 and purchase a particular broadcasting contents therefrom through wired/wireless communication. Upon receiving a request from the mobile device 200 to purchase contents, the broadcasting contents supplying device 300 processes payment for the contents fee through the billing system of the mobile device 200 and transmits a contents purchase certificate to the mobile device 200.

The mobile device 200 may generate a public key and a private key by combining at least two of the contents purchase certificate, the pairing certificate and information of the mobile device 200. The private key may be transmitted to the broadcasting contents receiving device 100 and the public key may be transmitted to the broadcasting contents supplying device 300.

The broadcasting contents supplying device 300 may generate an encoded CW by using the public key and scramble the broadcasting contents.

The broadcasting contents supplying device 300 may transmit the encoded CW to the broadcasting contents receiving device 100 via the mobile device 200.

The broadcasting contents receiving device 100 may decode the received encoded CW by using the stored private key, and descramble the encoded broadcasting contents received by the receiver 110, by using the decoded CW.

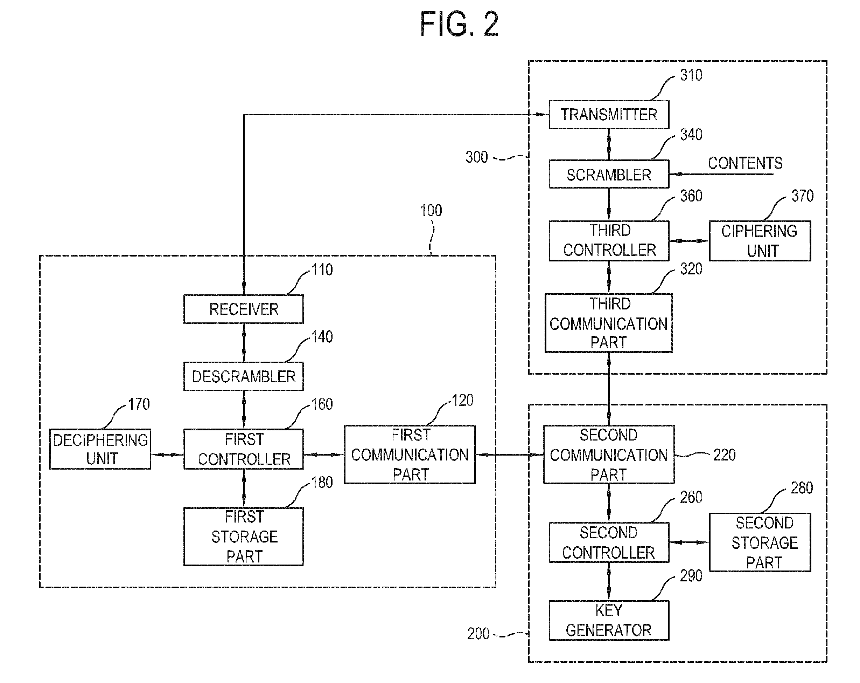

As shown in FIG. 2, the encoded contents transmitting and receiving system may include the encoded contents supplying device 300 which supplies an encoded contents, the encoded contents receiving device 100 which receives the encoded contents from the encoded contents supplying device 300, and the mobile device 200 which is connected between the encoded contents supplying device 300 and the encoded contents receiving device 100 for communication and generates a decoding key to decode the encoded contents.

The encoded contents receiving device 100 may include a receiver 110 which receives an encoded contents from the contents supplying device 300; a first communication part 120 (communicator) which communicates with the mobile device 200; a first controller 160 which controls the first communication part 120 to pair with the mobile device 200, to receive a private key from the paired mobile device 200 and to receive an encoded CW from the contents supplying device 300 through the mobile device 200; a deciphering unit 170 which decodes the encoded CW based on the received private key to descramble the encoded contents supplied by the contents supplying device 300; a descrambler 140 which descrambles the encoded contents received by the receiver 110, by using the CW provided by the deciphering unit 170; and a first storage part 180 which stores therein various data and programs including the received private key.

The receiver 110 may receive a broadcasting signal transmitted by the contents supplying device 300 through a channel selected by, e.g., a tuner (not shown). The channel may include a satellite channel and a terrestrial channel. The broadcasting signal may include a TV broadcasting signal, radio broadcasting signal and data broadcasting signal.

The receiver 110 may receive a digital broadcasting signal using a digital broadcasting system such as Digital Multimedia Broadcasting-Terrestrial (DMB-T), Digital Multimedia Broadcasting-Satellite (DMB-S), Media Forward Link Only (MediaFLO), Digital Video Broadcast-Handheld (DVB-H), and Integrated Services Digital Broadcast-Terrestrial (ISDB-T).

Broadcasting signals and broadcasting-related information which are received by the receiver 110 may be stored in the first storage part 180.

The first communication part 120 may access the Internet through an access point (not shown) which is used to access the Internet in a wired or wireless manner. The first communication part 120 may apply data communication such as Very High Bit Rate Digital Subscriber Line (VDSL), Ethernet, Token-ring, High Definition Multimedia Interface (HDMI), Universal Serial Bus (USB), Component, Low Voltage Differential Signaling (LVDS) and Header Error Control (HEC); mobile communication such as 2G, 3G, 4G and Long Term Evolution (LTE); wireless Internet technology such as Wireless LAN (WLAN) (Wi-Fi), Wireless broadband (Wibro), World Interoperability for Microwave Access (Wimax), and High Speed Downlink packet Access (HSDPA), and local area communication technology such as Bluetooth, Radio Frequency Identification (RFID), Infrared Data Association (IrDA), Ultra Wideband (UWB), and Zigbee.

The first controller 160 may control overall operations of the contents receiving device 100 including the receiver 110, the first communication part 120, the deciphering unit 170, the descrambler 140 and the first storage part 180.

The first controller 160 may perform a pairing process as requested by the mobile device 200, and register the paired mobile device 200. Upon receiving a request from the mobile device 200 for pairing, the first controller 160 may determine whether to accept or reject the pairing request. That is, if the number of the paired mobile device which has been registered already is a predetermined number or less, the first controller 160 may accept the pairing, and if the number of the paired mobile device which has been registered already is a predetermined number or more, the first controller 160 may notify the mobile device 200 of rejection of the pairing.

The first controller 160 may transmit a pairing certificate to the mobile device 200, and may store in the first storage part 180 the private key that has been generated and transmitted by the mobile device 200.

The first controller 160 may include application specific integrated circuits (ASICs), digital signal processors (DSPs), digital signal processing devices (DSPDs), programmable logic devices (PLDs), field programmable gate arrays (FPGAs), processors, controllers, micro-controllers and microprocessors.

The deciphering unit 170 may include software which executes an encoding algorithm, or hardware such as a microchip designed to execute the encoding algorithm.

The deciphering unit 170 may decode the encoded CW generated by the contents supplying device 300 and transmitted by the mobile device 200, by using the private key stored in the first storage part 180.

The descrambler 140 may descramble the encoded contents by using the CW provided by the deciphering unit 170. The descrambler 140 may be manufactured as a circuit module or a microchip.

The first storage part 180 stores therein unlimited data. The first storage part 180 is accessed by the first controller 160, which reads/records/modifies/deletes/ updates the data stored in the first storage part 180. The data stored in the first storage part 180 may include, e.g., the private key provided by the mobile device 200, an operating system (OS), various applications which may be executed on the OS, information of the paired mobile device 200, image data and additional data.

The first storage part 180 may include at least one of a flash memory type, a hard disk type, a multimedia card micro type, a card type memory (e.g. SD or XD memory), a random access memory (RAM), a static random access memory (SRAM), a read only memory (ROM), an electrically erasable programmable read-only memory (EEPROM), a programmable read-only memory (PROM), a magnetic memory, a magnetic disk, and an optical disk.

The encoded contents supplying device 300 may include a third communication part 320 which communicates with the mobile device 200; a third controller 360 which controls the third communication part 320 to transmit a contents purchase certificate to the mobile device 200 in response to the request from the mobile device 200 to purchase the contents and to receive from the mobile device 200 a public key which is generated on the basis of the contents purchase certificate; a ciphering unit 370 which generates an encoded CW by using the public key to transmit the CW to the mobile device 200; a transmitter 310 which transmits to the contents receiving device 100 an encoded contents which may be scrambled by the CW; and a scrambler 340 which scrambles a broadcasting contents by using the encoded CW.

The third communication unit 320 may apply data communication such as VDSL, Ethernet, Token-ring, HDMI, USB, Component, LVDS and HEC; mobile communication such as 2G, 3G, 4G and LTE; wireless Internet technology such as WLAN (Wi-Fi), Wibro, Wimax, and HSDPA; and local area communication technology such as Bluetooth, RFID, IrDA, UWB, and Zigbee.

The third controller 360 may control overall operations of the contents supplying device 300 including the transmitter 310, the third communication part 320, the ciphering unit 370, the scrambler 340 and the third storage part 380.

In response to the request from the mobile device 200 to purchase contents, the third controller 360 may transmit the contents purchase certificate to the mobile device 200 through the third communication part 320. In response to the request from the mobile device 200 to purchase the contents, the third controller 360 may charge the contents fee through the billing system of the mobile device 200. Of course, the third controller 360 may directly charge the contents fee to a user.

The third controller 360 may store the public key generated and transmitted by the mobile device 200, or store the encoded CW generated by the ciphering unit 370, in the mobile device 200 through the third communication part 320.

The third controller 360 may include ASICs, DSPs, DSPDs, PLDs, FPGAs, processors, controllers, micro-controllers and microprocessors.

The ciphering unit 370 may include software which executes an encoding algorithm, or hardware such as a microchip designed to execute the encoding algorithm.

The ciphering unit 370 may encode the CW by using the public key.

The scrambler 340 may scramble the contents by using the CW provided by the ciphering unit 370. The scrambler 340 may be manufactured as a circuit module or a microchip.

The transmitter 310 may transmit the scrambled contents to the contents receiving device 100 through a channel. The channel may include a satellite channel and a terrestrial channel. The broadcasting signal may include a TV broadcasting signal, a radio broadcasting signal and a data broadcasting signal.

The transmitter 310 may transmit a digital broadcasting signal using a digital broadcasting system such as DMB-T, DMB-S, MediaFLO, DVB-H, and ISDB-T.

The mobile device 200 may include a key generator 290 which generates a public key and a private key; a second communication part 220 which communicates with the contents receiving device 100 and the contents supplying device 300 in a wired or wireless manner; a second controller 260 which controls the second communication part 220 to pair with the contents receiving device 100, to transmit a public key to the paired contents receiving device 100, to transmit the public key to the contents supplying device 300 and to transmit the encoded CW generated on the basis of the public key from the contents supplying device 300 to the contents receiving device 100; and a second storage part 280 which stores therein a contents purchase certificate and a pairing certificate.

The mobile device 200 may include a telecommunication mobile device such as a smart phone, a personal digital assistant (PDA), a laptop computer, etc.

A user may use the mobile device 200 to request and purchase contents from a contents supplier and receive a contents purchase certificate, and to pair with the contents receiving device 100 and receive a pairing certificate.

The key generator 290 may generate a public key and a private key by combining at least two of the contents purchase certificate, the pairing certificate and the information of the mobile device 200 according to the encoding algorithm. The key generator 290 may include software or hardware which executes the encoding algorithm.

The second communication part 220 may communicate with the contents supplying device 300 and the contents receiving device 100, respectively, in a wired or wireless manner.

The second communication part 220 may apply data communication such as VDSL, Ethernet, Token-ring, HDMI, USB, Component, LVDS and HEC; mobile communication such as 2G, 3G, 4G and LTE; wireless Internet technology such as WLAN (Wi-Fi), Wibro, Wimax, and HSDPA; and local area communication technology such as Bluetooth, RFID, IrDA, UWB, and Zigbee.
The second controller 260 may control overall operations of the mobile device 200 including the key generator 290, the second communication part 220, and the second storage part 280.

The second controller 260 may control the second communication part 220 to pair the mobile device 200 and the contents receiving device 100.

The pairing process is performed as follows: The mobile device 200 requests the contents receiving device 100 to pair with the mobile device 200. Then, the mobile device 200 receives a pairing acceptance number from the contents receiving device 100, and if a user inputs the pairing acceptance number, the mobile device 200 checks the number and transmits an acceptance certificate and a message private key to the contents receiving device 100. Then, the mobile device 200 receives the acceptance certificate and message private key of the contents receiving device 100.

The second controller 260 may receive the contents purchase certificate from the contents supplying device 300 through the second communication part 220 and store the contents purchase certificate in the second storage part 280 according to the request of the mobile device 200 for purchasing the contents.

The second controller 260 may transmit the public key generated by the key generator 290 to the contents supplying device 300 and transmit the private key to the contents receiving device 100 through the second communication part 220.

The second controller 260 may include ASICs, DSPs, DSPDs, PLDs, FPGAs, processors, controllers, micro-controllers and microprocessors.

The second storage part 280 stores therein unlimited data. The second storage part 280 is accessed by the second controller 260, which reads/records/modifies/deletes/ updates the data stored in the second storage part 280. The data stored in the second storage part 260 may include, e.g., the contents purchase certificate provided by the contents supplying device 300, the pairing certificate provided by the contents receiving device 100, OS, various applications which may be executed on the OS, information of the paired contents receiving device 100, image data and additional data.
The second storage part 280 may include at least one of a flash memory type, a hard disk type, a multimedia card micro type, a card type memory (e.g. SD or XD memory), RAM, SRAM, ROM, EEPROM, PROM, magnetic memory, magnetic disk, and optical disk.

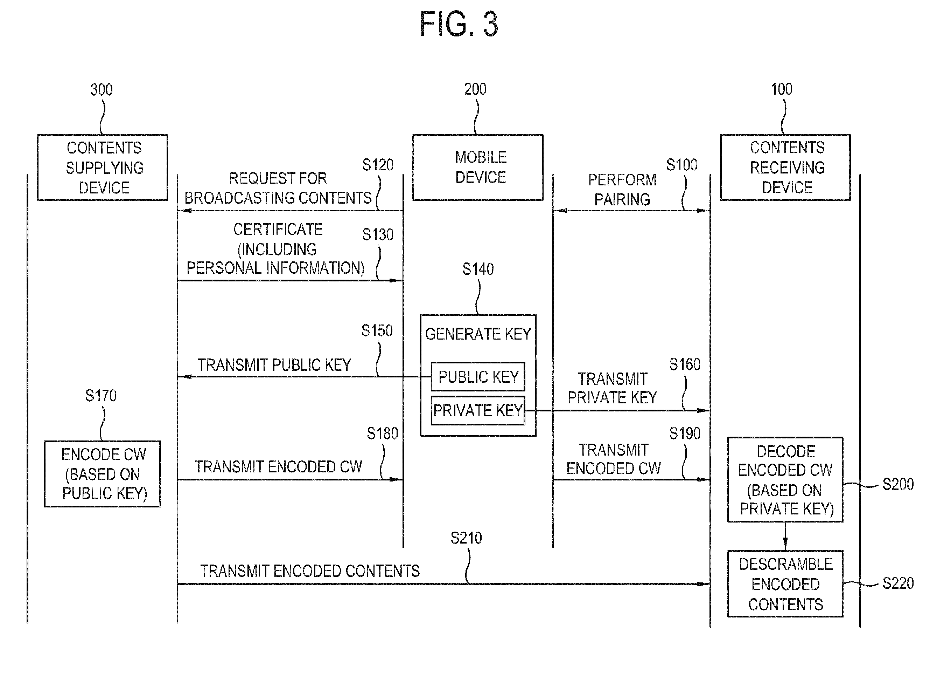

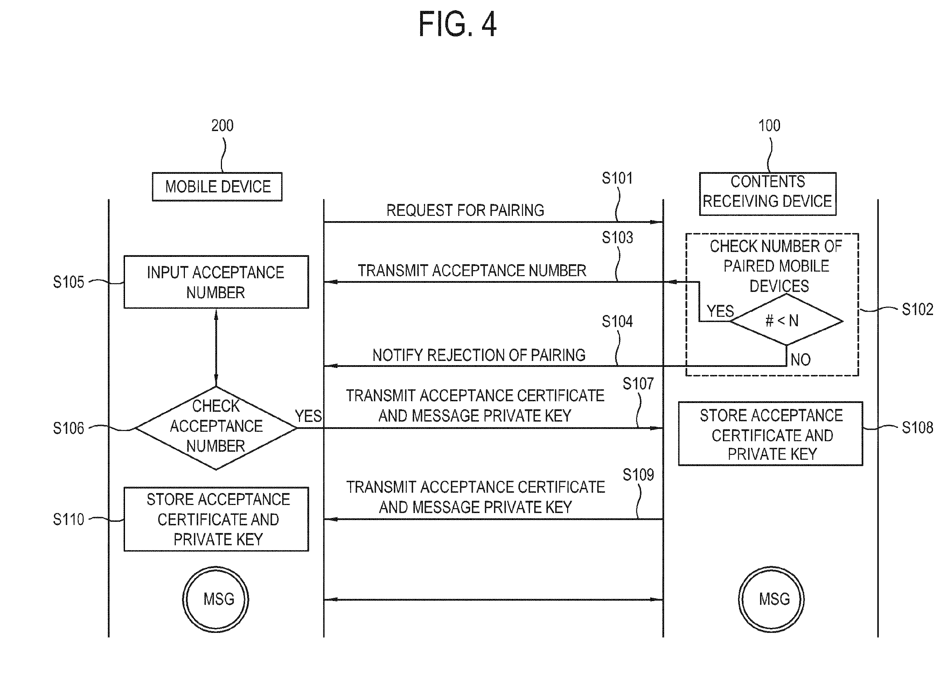

Hereinafter, an encoded contents transmitting and receiving method according to an exemplary embodiment will be described in detail with reference to FIGS. 3 and 4.

A user pairs his/her mobile device 200, e.g., a smart phone and the contents receiving device 100 i.e., an IPTV receiving an encoded contents and enabling a user to view the contents, in advance (S100).

The pairing process will be described with reference to FIG. 4.

If a user requests the contents receiving device 100 to pair with the mobile device 200 (S101), the contents receiving device 100 determines whether to accept such request.

The content receiving device 100 checks the number of mobile devices which are registered to have been paired with the contents receiving device 100 (S102). If the number of the paired mobile devices does not exceed a predetermined number N (YES), the contents receiving device 100 transmits an acceptance number, e.g. 5 to the mobile device 200 (S103). If the number of the paired mobile devices exceeds the predetermined number N (NO), the contents receiving device 100 notifies the mobile device 200 of its rejection of the pairing (S104).

Upon receiving the pairing acceptance number from the contents receiving device 100, the mobile device 200 displays the number on a screen. A user inputs the number through a user input device (not shown) and accepts the pairing (S105). If a user fails to input the acceptance number within predetermined time, it is determined that the acceptance has been withdrawn. If a user inputs the acceptance number, the mobile device 200 checks whether the number has been input correctly (S106). If the acceptance number has not been input correctly, the mobile device 200 may display an interface so that a user may select whether to input the acceptance number again or withdraw the acceptance.
After checking whether a user has input the acceptance number correctly, the mobile device 200 transmits to the contents receiving device 100 the acceptance certificate (pairing certificate) and the message private key (S107).

The contents receiving device 100 stores in the non-volatile first storage part 160 the received acceptance certificate (pairing certificate) and the message private key (S108), and transmits to the mobile device 200 the acceptance certificate (pairing certificate) and the message private key of the contents receiving device 100 (S109).

The mobile device 200 stores in the non-volatile second storage part 260 the received acceptance certificate (pairing certificate) and the message private key and completes the pairing process (S110).

The mobile device 200 and the contents receiving device 100 may exchange any message by using the aforementioned message private key.

As described above, a user may pair his/her or any person's mobile device 200 and the contents receiving device 100 to which a contents is provided.

A user may request and purchase desirable contents from the contents supplying device 300 through the paired mobile device 200 (S120).

Upon receiving a request from a particular mobile device 200 for a contents, the contents supplying device (provider) 300 charges the contents fee through the billing system of the mobile device 200 or charges the contents fee to a user of the mobile device 100 in arrears or receives prepayment for the contents fee and transmits the contents purchase certificate to the mobile device 200 (S130).

The mobile device 200 generates the public key and private key by combining at least two of the contents purchase certificates, the pairing certificate and the information of the mobile device 200 (S140).

The mobile device 200 transmits the generated public key to the contents supplying device 300 (S150), and transmits the private key to the contents receiving device 100 (S160).
Based on the public key, the contents supplying device 300 generates the encoded CW (S170), and transmits the encoded CW to the mobile device 200 (S180).

The mobile device 200 transmits the received encoded CW to the contents receiving device 100 (S190).

The contents receiving device 100 decodes the received encoded CW by using the stored private key (S200).

The contents supplying device 300 scrambles the contents by using the CW, and transmits the scrambled contents to the contents receiving device 100 (S210).

The contents receiving device 100 descrambles the received encoded contents by using the decoded CW.

As described above, the CW which is used to descramble the encoded contents is generated and exchanged through the mobile device 200 so that a safer conditional access contents transmitting and receiving service which is prevented from hacking may be provided, compared to the case where the contents supplying device 300 and the contents receiving device 100 exchange ECM, EMM and CW therebetween.

Also, the contents transmitting and receiving device according to the embodiment may overcome limitations of time and location resulting from usage of a smart card or a module for very limited decoding process, and provide conditional access transmission and reception service without limitation.

The encoded contents transmitting and receiving method according to an exemplary embodiment has the following effects:
Firstly, the encoded contents transmitting and receiving method may safely protect paid contents from hacking.
Secondly, the encoded contents transmitting and receiving method may encourage usage of a uniform smart card and conditional access algorithm.
Thirdly, the encoded contents transmitting and receiving method is cost efficient since contents providers do not need to operate a particular service billing system.
Fourthly, a user may pay fees for all contents he/she views by using a single mobile device, regardless of the type of a smart card of a contents receiving device or service providers.

Lastly, a user may purchase and view various contents without limitation of location or time.

Although a few exemplary embodiments have been shown and described, it will be appreciated by those skilled in the art that changes may be made in these exemplary embodiments without departing from the principles of the invention, the range of which is defined in the appended claims.

## Claims

1. An encoded contents receiving method of a contents receiving device, the method comprising:
pairing with a mobile device through one from among a wired communication and a wireless communication;
receiving a private key which is generated by the paired mobile device;
receiving an encoded control word CW from a contents supplying device; and
decoding the encoded CW based on the received private key to descramble an encoded contents supplied by the contents supplying device.

2. The method according to claim 1, wherein the CW is encoded by the contents supplying device based on a public key which is generated by the mobile device together with the private key.

3. The method according to claim 2, wherein the private key and public key are generated by combining at least two from among a contents purchase certificate, a pairing certificate and information of the mobile device.

4. The method according to any one of the preceding claims, wherein the pairing comprises:
receiving a request for pairing from the mobile device;
transmitting an acceptance number to the mobile device;
receiving a first acceptance certificate and a first message private key of the mobile device; and
transmitting a second acceptance certificate and a second message private key of the contents receiving device to the mobile device.

5. The method according to claim 4, wherein the pairing further comprises:
storing the first acceptance certificate and the first message private key of the mobile device.

6. The method according to claim 4 or 5, wherein the pairing further comprises determining whether a number of registered mobile devices at the time when the pairing request has been received exceeds a predetermined number.

7. The method according to claim 6, wherein the determining comprises transmitting a pairing unavailable notification to the mobile device if it is determined that the number of the registered mobile devices exceeds the predetermined number.

8. The method according to claim 3, wherein the contents purchase certificate is provided by the contents supplying device in response to a request for contents from the mobile device.

9. The method according to claim 8, wherein the contents supplying device charges a contents fee to a billing system of the mobile device according to the request for the contents from the mobile device.

10. The method according to any one of the preceding claims, wherein the encoded CW is received via the mobile device.

11. A contents receiving device which receives an encoded contents, the device comprising:
a receiver which is configured to receive an encoded contents from a contents supplying device;
a communicator which is configured to communicate with a mobile device;
a controller which is configured to control the communicator to pair with the mobile device, to receive a private key from the paired mobile device, and to receive an encoded control word CW from the contents supplying device through the mobile device; and
a decipherer which is configured to decode the encoded CW based on the received private key to descramble the encoded contents supplied by the contents supplying device.

12. A key generating method for decoding an encoded content, the method comprising:
pairing, by a mobile device, with a contents receiving device through communication;
purchasing contents from a contents supplying device and receiving a contents purchase certificate;
generating a public key and a private key based on the contents purchase certificate;
transmitting the private key to the paired contents receiving device;
transmitting the public key to the contents supplying device; and
receiving from the contents supplying device an encoded control word CW generated by the contents supplying device on the basis of the public key and transmitting the encoded CW to the contents receiving device.

13. A mobile device comprising:
a key generator which is configured to generate a public key and a private key;
a communicator which is configured to communicate with a contents receiving device and a contents supplying device in one from among a wired manner and wireless manner; and
a controller which is configured to control the communicator to pair with the contents receiving device, to transmit a private key to the paired contents receiving device, to transmit the public key to the contents supplying device and to receive from the contents supplying device an encoded control word CW which is generated on the basis of the public key, and to transmit the encoded CW to the contents receiving device.

14. An encoded contents supplying device, the device comprising:
a communicator which is configured to communicate with a mobile device;
a controller which is configured to control the communicator to transmit a contents purchase certificate to the mobile device in response to a request for contents from the mobile device and to receive from the mobile device a public key that is generated on the basis of the contents purchase certificate;
a cipherer which is configured to generate an encoded control word CW by using the public key to transmit the encoded CW to the mobile device; and
a transmitter which is configured to transmit to a contents receiving device an encoded contents that is receivable by using the CW.

15. An encoded contents transmitting and receiving system, the system comprising:
an encoded contents supplying device which supplies an encoded contents;
an encoded contents receiving device which receives the encoded contents from the encoded contents supplying device; and
a mobile device which is connected between the encoded contents supplying device and the encoded contents receiving device for communication and generates a decoding key to decode an encoded contents.
